# EUROPEAN PATENT APPLICATION

(11) **EP 4 056 252 A1**
(43) Date of publication of application: **14.09.2022**
(21) Application number: 21162020.8
(22) Date of filing: 11.03.2021
(51) Int. Cl.: B01D 29/27, B01D 29/58, B01D 35/12, B01D 35/30, C02F 1/00

(54) **FILTER CARTRIDGE FOR USE WITH A LIQUID FILTERING DEVICE**

(71) Applicant: Brita GmbH, 65232 Taunusstein (DE)
(72) Inventor: SOBEK, Nicoletta, 65232 Taunusstein (DE); JOST, Alexander, 65719 Hofheim (DE)

(57) **Abstract**

A filter cartridge (1) for use with a liquid filtering device comprises a first housing element (3) with a first filling opening (9), a second housing element (4) with a second filling opening (10), and a separation element (5), whereby the separation element (5) can be detachably mounted on the first housing element (3) in a manner to cover the first filling opening (9) of the first housing element (3) and forming a first filter chamber (11) for a first filter medium (15), and whereby the separation element (5) can also be detachably mounted on the second housing element (4) in a manner to cover the second filling opening (10) of the second housing element (4) and forming a second filter chamber (12) for a second filter medium (16). The first housing element (3), the second housing element (4) and the separation element (5) each comprise liquid openings (6, 7, 17) arranged and configured to allow the liquid to flow along a flow path running through the first filter chamber (11), through the separation element (5) and through the second filter chamber (12) .

## Description

### Technical Field

The invention relates to a filter cartridge for use with a liquid filtering device, whereby the filter cartridge comprises a sealable housing in which a filter medium can be disposed, the housing having a plurality of liquid openings arranged and configured to allow a liquid to flow through the housing and through the filter medium disposed in the housing.

### Background of the invention

Many liquid filtering devices define a flow path for a liquid that runs through a filter cartridge which comprises a filter medium or several filter media for removing impurities or unwanted constituents from the liquid that flows through the filter cartridge. The filter medium can e.g. comprise granular activated carbon to adsorb solved materials or ion exchange materials to modify the water hardness. The filter cartridge usually comprises a housing that contains the filter medium which can be made from a single type of filter material or comprise a mixture of different filter materials. In order to allow for the liquid to interact with the filter medium, the filter housing comprises at least two liquid openings that are arranged and configured to allow the liquid to flow through the housing that contains the filter medium. Some filter cartridges have several or a large number of very small liquid openings that are smaller than the granular size of the filter material. Other filter cartridges have only two or a small number of liquid openings that are covered by e.g. a mesh or a grid or a textile material which can be flowed through by the liquid but retain the filter medium within the housing.

Usually, such filter cartridges are prefabricated and contain a uniformly specified filter medium. Sometimes such filter cartridges comprise a mixture of several filter materials. Other filter cartridges comprise two compartments that are filled with different filter materials. For most filter cartridges, the housing is made of plastic. The housing comprises a filling opening that allows for filling an interior of the housing with the filter material. Afterwards, the filling opening is sealed, usually with a cover which can no longer be detached from the housing without causing damage. The handling of such filter cartridges is very simple and safe. However, recycling of the filter materials after the expiration of the service life of such a filter cartridge is very complicated and usually requires a destructive opening or complete destruction of the housing, and a cumbersome and complex separation of the individual materials involved.

Furthermore, it is not possible to adapt such filter cartridges to different liquid treatments or filtering tasks after the manufacture of said filter cartridges. If such a filter cartridge is used within a water filtering device, it is not possible to adapt to different water hardness or to different content or kind of impurities. Thus, for many filter cartridges the filter material contained within the housing is either not fully depleted at the time of a filter cartridge change, or has been depleted some time ago which resulted in poor filtering results since then.

Accordingly, there is a need for a filter cartridge that allows for easy adaption to different liquid treatments during the service life of the filter cartridge, and that facilitates the re-use of components and the recycling of filter material contained within the filter cartridge.

### Summary of the invention

Thus, the present invention relates to a filter cartridge as described at the beginning, whereby the housing comprises a first housing element with a first filling opening, a second housing element with a second filling opening, and a separation element, whereby the separation element can be detachably mounted on the first housing element in a manner to cover the first filling opening of the first housing element and forming a first filter chamber for a first filter medium, and whereby the separation element can also be detachably mounted on the second housing element in a manner to cover the second filling opening of the second housing element and forming a second filter chamber for a second filter medium, and in that the first housing element, the second housing element and the separation element each comprise liquid openings arranged and configured to allow the liquid to flow along a flow path running through the first filter chamber, through the separation element and through the second filter chamber. Each of the first and second filter chamber can be filled with either the same filter material or a different filter material. It is also possible to only use the first or second filter chamber. The unused filter chamber can be either empty or even not attached to the separation element, reducing the space requirement for the filter cartridge. As the first housing element and the second housing element are detachably mounted to the separation element, each of the first and second housing element can be removed from the separation element, which results in uncovering the respective filling opening for a replacement of the filter material that is contained within the respective filter chamber.

The first housing element, the second housing element and the separation element can be made of a durable material that allows for many cycles of use for these parts that only provide for a first filter chamber and/or a second filter chamber of the filter cartridge and that will not be depleted or wasted during the service life of the filter cartridge. Preferably, the first housing element, the second housing element and the separation element are made of metal, e.g. stainless steel, or of a durable plastic material which can withstand many cycles of use.

The filter material can be filled into the respective first and second housing elements before attaching the first and second housing elements to the separation element. Attaching the first and second housing element to the separation element also results in closing the respective filling openings of the first and second housing element, trapping the filter material within the respective filter chamber.

The filter cartridge can be filled with a given amount of filter material during manufacture of the filter cartridge. However, after expiration of the service life of the filter material, the first housing element or the second housing element or both can be detached from the separation element and the depleted or wasted filter material that is contained within the respective filter chamber can be removed and replaced. Afterwards, the just filled first or second housing element can then be re-attached to the separation element for a continued use of the filter cartridge with new filter material. It is easily possible to provide for an individual filling of the filter chambers with any kind of filter material. Furthermore, it is possible to combine two different filter materials with different useful life within the two filter chambers, which allows for a selective replacement of one filter material from one of the two filter chambers after the expiration of the useful life of said filter material without need for also replacing the other filter material.

The first housing element and/or the second housing element can be attached to the separation element by using detachable fastening means like e.g. screws or clamps or a bayonet locking mechanism that provide for a secure attachment of the first and second housing to the separation element. It is also possible that the first and second housing element and the separation element have latching tongues and corresponding recesses that provide for a latching connection between the respective parts.

According to an advantageous embodiment of the invention, the separation element comprises a first thread to screw the separation element onto the first housing element and/or a second thread to screw the separation element onto the second housing element. Attaching the first or second housing element to the separation element by simply screwing both parts together is easily and quickly performed, does not require special skills or tools, and provides for a secure fastening of the first and second housing element to the separation element. It is possible to configure the first thread different from the second thread, so that a clear assignment of the first housing element and the second housing element to the respective thread is specified. However, it is also possible and deemed advantageous to have both first and second thread identical, which allows to attach each of the first and second housing to each of the threads, which facilitates the handling of the filter cartridge during a replacement of filter material contained within the filter chambers of the filter cartridge. Furthermore, having identical threads also allows for an identical shape of the filling opening of the two housing elements, resulting in a matching surface that can be used for the flow through of the liquid from one filter chamber into the other filter chamber.

Optionally, the liquid openings are designed to retain a filter medium within the first filter chamber or within the second filter chamber. The liquid openings can have such a small diameter or size that a granular filter material with granules larger than the size of the liquid openings will be trapped within the respective filter chamber. It is also possible to provide for a filter material retaining cover of large liquid openings that allows for the liquid to flow through the large liquid openings but that prevents the filter from passing through the large liquid openings. Such a filter material retaining cover can be a mesh or a grid, or a cover made from a textile material or a nonwoven material.

In accordance with a particularly advantageous embodiment of the invention, a liquid flowable container filled with a filter medium is arranged within the first filter chamber and/or a liquid flowable container filled with a filter medium is arranged within the second filter chamber. Thus, in order to remove and replace a depleted filter material from a filter chamber, it is not required to remove granular material that is loosely contained within a filter chamber, but to only remove and replace a container that contains the filter material. Any liquid that flows through a filter chamber will also flow through the liquid flowable container that is arranged within a filter chamber and that contains the filter material. In order to allow the liquid to flow through the container, the container may have liquid openings similar to those described above that prevent any filter material to exit the container. By premanufacturing containers that are filled with different filter materials, it is easily possible to adapt the filter cartridge to different filtering tasks or for a different treatment of the liquid that flows through the filter cartridge, which only requires the selection of the respective containers and the combination of the corresponding filter materials within the filter cartridge.

In order to provide for an effective liquid treatment, in yet another embodiment of the invention a shape of the liquid flowable container is adapted to a shape of the first filter chamber or the second filter chamber, so that the liquid flowable container completely fills the respective filter chamber. Thus, the available space within each of the first and second housing element will be completely filled with the filter material and therefore fully used for the liquid treatment. Furthermore, by adapting the shape of the liquid flowable containers to the respective filter chamber, the liquid flow cannot bypass the liquid flowable container, but must flow through the liquid flowable container and will be treated by the filter material contained therein.

According to an advantageous aspect of the invention, the liquid flowable container comprises means for attaching the liquid flowable container along an opening edge of the first filter chamber between the first filter housing and the separation element and/or along an opening edge of the second filter chamber between the second filter housing and the separation element. The number or size of void spaces around an outer surface of the liquid flowable container within a region of transition between the surrounding element and the housing element can be reduced. Thus, by fastening the liquid flowable container along an opening edge of the dedicated filter chamber, the flow of liquid can be directed into the liquid flowable container with the filter material therein. Furthermore, such means for attaching the liquid flowable container within the surrounding housing element facilitate the insertion and correct positioning of the liquid flowable container inside the housing element and additionally reduces the risk of incorrect arrangement and use of the liquid flowable container at times of a replacement of the liquid flowable container and the filter material contained therein.

According to an advantageous embodiment of the invention, the means for attaching the liquid flowable container comprise a flange projecting to the outside that can be clamped between the separating element and the first or second filter housing. The separating element or a housing element of both may form a seating for such a flange of the liquid flowable container. A flange resting in a corresponding seating helps during the handling of the liquid flowable container at times of replacement, and also supports a tight sealing between the liquid flowable container and the separation element with the corresponding housing element. The flange can run along a circumferential edge. It is also possible that the flange comprises several tongues formed at an outer surface that project outwards.

In accordance with a particularly advantageous embodiment of the invention, the liquid flowable container is a bag made of a material through which the liquid can flow and which retains a filter material within the bag. Preferably, the bag is made from a flexible material that can adapt to the shape of the filter chamber that is defined by the shape of the corresponding housing element. The bag can be made e.g. of a textile material or a nonwoven material with a porosity that allows the liquid to flow through the material, but that retains the filter material within the interior of the bag. Such a bag can be designed to fit into several different filter chambers of e.g. different size or shape, which reduces the manufacturing costs for different filter cartridges. A bag made of a textile or nonwoven material can be designed to be easily ruptured for removal of the filter material contained therein in order to allow for a recycling of the filter material after expiration of the service life of the bag. Furthermore, there are many such materials known that meet the requirements for the intended use as bag and that are environmentally-friendly produced and allow for cost-saving recycling.

In order to further reduce the manufacturing costs, a shape of the first housing element optionally equals a shape of the second housing element. The shape of both housing elements can be e.g. cylindrical or conical. The housing elements may comprise a large cross-sectional area at the filling opening next to the connection with the separation element, and a tapered end section opposite thereto.

According to an advantageous embodiment of the invention, a shape of the first housing element and/or of the second housing element is hemispherical and that a shape of the separation element equals the matching great circle. A separation element with a large cross-sectional area allows for different shape and arrangement of liquid openings that control the flow of liquid into or out from a housing element. Similarly, the large outer surface of the hemispherical housing elements also allows for different shape and arrangement of liquid openings that also control the flow of liquid into or out from the corresponding housing element. Thus, a hemispherical shape of the housing elements provides for easy adaption of the flow volume and flow velocity of the liquid through the filter cartridge.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a side view of a schematic representation of a filter cartridge with a first housing element and a second housing element that are attached to a separation element arranged in between the two housing elements,
Figure 2 illustrates a sectional view of the filter cartridge shown in figure 1 that is seated within a seating of a liquid filtering device,
Figure 3 illustrates a sectional view of the filter cartridge as shown in figure 2, but without the first housing element,
Figure 4 illustrates an enlarged partial view of the filter cartridge in the region of the mounting of the housing elements with the separation element and with bags that are arranged within the filter chambers formed by the respective housing elements, and
Figure 5 illustrates a side view of the filter cartridge shown in figure 1, but with an additional handle provided on top of the first housing element.

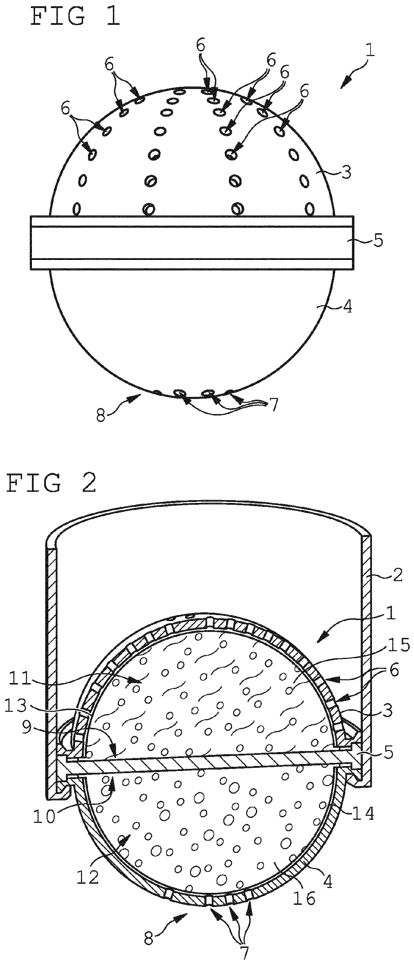

Figure 1 illustrates a filter cartridge 1 for use with a liquid filtering device which is not shown in figure 1. Figure 2 illustrates a sectional view of the filter cartridge 1 shown in figure 1, whereby the filter cartridge 1 is mounted within a seating 2 of the liquid filtering device. The filter cartridge 1 comprises a first housing element 3 and a second housing element 4. Both first and second housing element 3, 4 are of hemispherical shape. Each of the first and second housing element 3, 4 is attached to a disc-shaped separation element 5, thereby forming a spherical housing of the filter cartridge 1 that is intersected by the disk-shaped separation element 5 that forms a great circle for the spherical housing of the filter cartridge 1.

The first housing element 3 that is shown above the second housing element 4 in figures 1 and 2 comprises a number of small liquid openings 6 that are arranged along lines of longitude that run from the pole to the separation element 5 that is attached to the opposite end of the first housing element 3. The second housing element 4 also comprises a number of small liquid openings 7 that are arranged at a bottom region 8 of the second housing element 4 that is opposite to the separation element 5.

As can be seen in figure 2, the first housing element 3 comprises a first filling opening 9 that is covered by the separation element 5. Also, the second housing element 4 comprises a second filling opening 10 that is also covered by the separation element 5. The first housing element 3 together with the separation element 5 form a first filter chamber 11 that can be accessed through the first filling opening 9. Similarly, the second housing element 4 together with the separation element 5 form a second filter chamber 12 that can be accessed through the second filling opening 10. In both filter chambers 11, 12 there is a bag 13, 14 that is filled with a filter material 15, 16. The first filter material 15 that is contained within the bag 13 inside the first filter chamber 11 is made of granular activated carbon. The second filter material 16 that is contained within the bag 14 inside the second filter chamber 12 comprises ion exchange material. Each bag 13, 14 is made of a textile material and provides for a liquid flowable container that retains the respective filter material 15, 16 that is inside the bag 13, 14, but allows the liquid to freely pass through the bags 13, 14.

The liquid that enters the first housing element 3 through the respective liquid openings 6 can then flow through the bag 13 that fills the first filter chamber 11 and the first filter material 15 that is contained within this bag 13. The liquid then passes through liquid openings 17 within the disk-shaped separation element 5 and flows into the second filter chamber 12 that is formed by the second housing element 4 which is attached to the separation element 5. The liquid flows through the bag 14 with the second filter material 16 contained therein before the liquid exits the second filter chamber 12 through the liquid openings 9 that are arranged at the bottom region 8 of the second housing element 4.

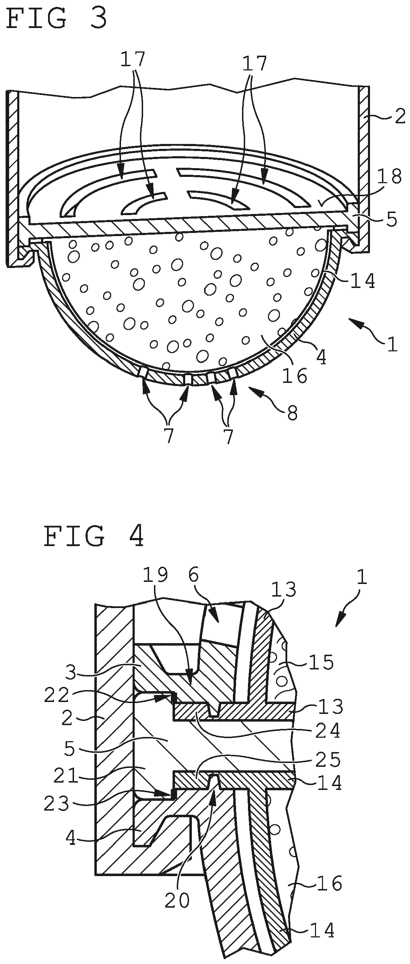

Figure 3 illustrates a sectional view of the filter cartridge 1 similar to figure 2, but without the first housing element 3 and the bag 13 mounted on top of the separation element 5. Thus, a surface 18 of the disk-shaped separation element 5 can be seen in figure 3. The liquid openings 17 of the embodiment shown in the figures have a circular arc design.

However, the liquid openings 17 within the separation element 5 can be of different shape and arrangement, and can be quite large and cover an area that is more than e.g. 50 % of the cross-sectional area of the disk-shaped separation element 5. The separation element 5 separates the first and second filter chamber 11, 12 and furthermore helps to arrange the bags 13, 14 in the predetermined position and orientation within the respective filter chamber 11, 12.

Figure 4 illustrates the attachment of the first and second housing element 3, 4 to the separation element 5, as well as the attachment of the bags 13, 14 to the separation element 5 along an opening edge 19, 20 of the first and second housing element 3, 4 that form the first and second filter chamber 11, 12. Along a circumferential edge 21 of the separation element 5 there is a first thread 22 for a threaded engagement with the first housing element 3 as well as a second thread 23 for a threaded engagement with the second housing element 4. Both housing elements 3, 4 can be easily attached with the separation element 5 by screwing them onto the first or second thread 22, 23.

The shape of the bags 13, 14 is adapted to fit into the first or second filter chamber 11, 12 and to completely fill the first or second filter chamber 11, 12. Each of the bags 13, 14 has a flange 24, 25 that projects radially outward and that can be positioned next to the respective thread 24, 25 between the separation element 5 and the corresponding housing element 3, 4 at the time of attaching the housing element 3, 4 with the separation element 5. Thus, the flanges 24, 25 of the bags 13, 14 will become clamped between the separation element 5 and the corresponding first or second housing element 3, 4, resulting in a tight-fitted seating of the bags 13, 14 inside the respective filter chamber 11, 12.

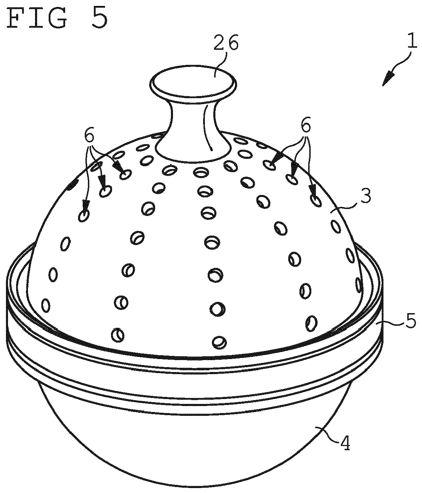

Figure 5 illustrates another embodiment of the filter cartridge 1, whereby the first housing element 3 comprises a handle 26 that facilitates the handling of the filter cartridge 1, namely the insertion and removal of the filter cartridge 1 into and from the seating 2 of the liquid filtering device.

## Claims

1. Filter cartridge (1) for use with a liquid filtering device, whereby the filter cartridge (1) comprises a sealable housing (3, 4) in which a filter medium (15, 16) can be disposed, the housing having a plurality of liquid openings (6, 7) arranged and configured to allow a liquid to flow through the housing (3, 4) and through the filter medium (15, 16) disposed in the housing (3, 4), **characterized in that** the housing (3, 4) comprises a first housing element (3) with a first filling opening (9), a second housing element (4) with a second filling opening (10), and a separation element (5), whereby the separation element (5) can be detachably mounted on the first housing element (3) in a manner to cover the first filling opening (9) of the first housing element (3) and forming a first filter chamber (11) for a first filter medium (15), and whereby the separation element (5) can also be detachably mounted on the second housing element (4) in a manner to cover the second filling opening (10) of the second housing element (4) and forming a second filter chamber (12) for a second filter medium (16), and **in that** the first housing element (3), the second housing element (4) and the separation element (5) each comprise liquid openings (6, 7, 17) arranged and configured to allow the liquid to flow along a flow path running through the first filter chamber (11), through the separation element (5) and through the second filter chamber (12).

2. Filter cartridge (1) according to claim 1, **characterized in that** the separation element (5) comprises a first thread (22) to screw the separation element (5) onto the first housing element (3) and/or a second thread (23) to screw the separation element (5) onto the second housing element (4).

3. Filter cartridge (1) according to claim 1, **characterized in that** the liquid openings (6, 7, 17) are designed to retain a filter medium (15, 16) within the first filter chamber (11) or within the second filter chamber (12).

4. Filter cartridge (1) according to claim 1, **characterized in that** a liquid flowable container filled with a filter medium (15, 16) is arranged within the first filter chamber (11) and/or a liquid flowable container filled with a filter medium (15, 16) is arranged within the second filter chamber (12) .

5. Filter cartridge (1) according to claim 4, **characterized in that** a shape of the liquid flowable container is adapted to a shape of the first filter chamber (11) or the second filter chamber (12), so that the liquid flowable container completely fills the respective filter chamber (11, 12).

6. Filter cartridge (1) according to claim 4 or claim 5, **characterized in that** liquid flowable container comprises means for attaching the liquid flowable container along an opening edge (19) of the first filter chamber (11) between the first filter housing (3) and the separation element (5) and/or along an opening edge (20) of the second filter chamber (12) between the second filter housing (4) and the separation element (5).

7. Filter cartridge (1) according to claim 6, **characterized in that** the means for attaching the liquid flowable container comprise a flange (24, 25) projecting to the outside that can be clamped between the separating element (5) and the first or second filter housing (3, 4).

8. Filter cartridge (1) according to one of the claims 4 to 7, **characterized in that** the liquid flowable container is a bag (13, 14) made of a flexible material through which the liquid can flow and which retains a filter material (15, 16) within the bag (13, 14).

9. Filter cartridge (1) according to one of the preceding claims, **characterized in that** a shape of the first housing element (3) equals a shape of the second housing element (4).

10. Filter cartridge (1) according to one of the preceding claims, **characterized in that** a shape of the first housing element (3) and/or a shape of the second housing element (4) is hemispherical and that a shape of the separation element (5) equals the matching great circle.
